# EUROPEAN PATENT APPLICATION

(11) **EP 4 749 951 A2**
(43) Date of publication of application: **27.05.2026**
(21) Application number: 26170859.8
(22) Date of filing: 06.10.2023
(51) Int. Cl.: H04B 7/185

(54) **ELECTORNIC DEVICE AND METHOD FOR PROVIDING CAPABILITY INFORMATION IN NON-TERRESTRIAL NETWORK**

(30) Priority: 07.10.2022 KR 20220129121
(62) Divisional of application: 23202135.2
(71) Applicant: Thinkware Corporation, Seongnam-si, Gyeonggi-do 13493 (KR)
(72) Inventor: KANG, Jeongkyu, Seongnam-si, Gyeonggi-do (KR); KIM, Dawon, Seongnam-si, Gyeonggi-do (KR); HAN, Taekyu, Seongnam-si, Gyeonggi-do (KR)
(74) Representative: BCKIP Part mbB

(57) **Abstract**

A method performed by a network device comprises: transmitting, to a user equipment, UE, a UE capability enquiry message; and receiving, from the UE, a UE capability information message corresponding to the UE capability enquiry message. The UE capability information message includes: information for indicating whether the UE supports a non-terrestrial network, NTN, access or not, and information related to a satellite antenna of the UE for the NTN access.

## Description

### BACKGROUND

### TECHNICAL FIELD

This disclosure generally relates to a non-terrestrial network (NTN), and more specifically, to an electronic device and a method for providing capability information in the non-terrestrial network.

### DESCRIPTION OF RELATED ART

To complement a terrestrial network that provides a wireless communication system, a non-terrestrial network (NTN) have been introduced. The non-terrestrial network may provide a communication service even in areas where construction of a terrestrial network is difficult or in disaster situations. In addition, an access network environment may be provided efficiently due to the recent decrease in satellite launch costs.

### SUMMARY

In embodiments, a method performed by a non-terrestrial network (NTN) device may comprise transmitting a UE capability enquiry message to a user equipment (UE) and receiving a UE capability information message corresponding to the UE capability enquiry message from the UE. The UE capability information may comprise at least one of information for indicating one of a plurality of types of NTN non-geostationary satellite orbit (NGSO) or information on a maximum number of one or more satellites accessible in the UE.

In embodiments, a method performed by a user equipment (UE) may comprise receiving a UE capability enquiry message from a non-terrestrial network (NTN) device and transmitting a UE capability information message corresponding to the UE capability enquiry message to the NTN device. The UE capability information may comprise at least one of information for indicating one of a plurality of types of NTN non-geostationary satellite orbit (NGSO) or information on a maximum number of one or more satellites accessible in the UE.

In embodiments, a non-terrestrial network (NTN) device may comprise at least one transceiver and at least one processor coupled to the at least one transceiver. The at least one processor may be configured to transmit a UE capability enquiry message to a user equipment (UE), and receive a UE capability information message corresponding to the UE capability enquiry message from the UE. The UE capability information may comprise at least one of information for indicating one of a plurality of types of NTN non-geostationary satellite orbit (NGSO) or information on a maximum number of one or more satellites accessible in the UE.

In embodiments, a device of a user equipment (UE) may comprise at least one transceiver and at least one processor coupled to the at least one transceiver. The at least one processor may be configured to receive a UE capability enquiry message from a non-terrestrial network (NTN) device, and transmit a UE capability information message corresponding to the UE capability enquiry message to the NTN device. The UE capability information may comprise at least one of information for indicating one of a plurality of types of NTN non-geostationary satellite orbit (NGSO) or information on a maximum number of one or more satellites accessible in the UE.

### BRIEF DESCRIPTION OF THE DRAWINGS

The above and other aspects, features, and advantages of certain embodiments of the disclosure will be more apparent from the following description, taken in conjunction with the accompanying, in which:
FIG. 1 illustrates a wireless communication system according to embodiments.
FIG. 2 illustrates an example of a non-terrestrial network (NTN) according to embodiments.
FIG. 3A illustrates an example of a control plane (C-plane) according to embodiments.
FIG. 3B illustrates an example of a user plane (U-plane) according to embodiments.
FIG. 4 illustrates an example of a resource structure in a time-frequency domain, in a wireless communication system according to embodiments.
FIG. 5 illustrates an example of implementing an NTN according to an embodiment.
FIGS. 6A and 6B illustrate an example of signaling for providing user equipment (UE) capability information according to an embodiment.
FIG. 7 illustrates examples of coverage extension in an NTN according to an embodiment.
FIG. 8 illustrates examples of a positioning method for a network-verified UE position in an NTN according to an embodiment.
FIG. 9 illustrates an example of disabling hybrid automatic repeat and request (HARQ) in an NTN according to an embodiment.
FIG. 10 illustrates an example of global navigation satellite system (GNSS) assistance information in an NTN according to an embodiment.
FIG. 11A illustrates components of an NTN payload according to an embodiment.
FIG. 11B illustrates components of an NTN gateway according to an embodiment.
FIG. 12 illustrates components of a terminal according to an embodiment.

### DETAILED DESCRIPTION

Terms used in the present disclosure are used only to describe a specific embodiment and may not be intended to limit the scope of another embodiment. A singular expression may include a plural expression unless it is clearly meant differently in the context. The terms used herein, including a technical or scientific term, may have the same meaning as generally understood by a person having ordinary knowledge in the technical field described in the present disclosure. Terms defined in a general dictionary among the terms used in the present disclosure may be interpreted with the same or similar meaning as a contextual meaning of related technology, and unless clearly defined in the present disclosure, it is not interpreted in an ideal or excessively formal meaning. In some cases, even terms defined in the present disclosure cannot be interpreted to exclude embodiments of the present disclosure.

In various embodiments of the present disclosure described below, a hardware approach is described as an example. However, since the various embodiments of the present disclosure include technology that use both hardware and software, the various embodiments of the present disclosure do not exclude a software-based approach.

A term referring to a signal (e.g., signal, information, message, signaling), a term referring to resource (e.g., symbol, slot, subframe, radio frame, subcarrier, resource element (RE), resource block (RB), bandwidth part (BWP), occasion), a term for operation state (e.g., step, operation, procedure), a term referring to data (e.g., packet, user stream, information, bit, symbol, codeword), a term referring to a channel, a term referring to network entities, a term referring to a component of an apparatus, and the like used in the following description are illustrated for convenience of description. Accordingly, the present disclosure is not limited to terms described below, and another term having an equivalent technical meaning may be used.

In the following description, a physical channel and a signal may be used interchangeably with data or a control signal. For example, a physical downlink shared channel (PDSCH) is a term referring to a physical channel through which data is transmitted, but the PDSCH may also be used to refer to data. In other words, in the present disclosure, the expression 'transmitting a physical channel' may be interpreted as equivalent to the expression 'transmitting data or a signal through a physical channel'.

Hereinafter, in the present disclosure, higher signaling refers to a signal transmission method transmitted from a base station to a terminal using a downlink data channel of a physical layer or from the terminal to the base station using a uplink data channel of the physical layer. Higher signaling may be understood as radio resource control (RRC) signaling or MAC control element (hereinafter, 'CE').

In addition, in the present disclosure, in order to determine whether a specific condition is satisfied or fulfilled, an expression of more than or less than may be used, but this is only a description for expressing an example and does not exclude description of more than or equal to or less than or equal to. A condition described as 'more than or equal to' may be replaced with ' more than', a condition described as 'less than or equal to' may be replaced with 'less than', and a condition described as 'more than or equal to and less than' may be replaced with 'more than and less than or equal to'. In addition, hereinafter, 'A' to 'B' means at least one of elements from A (including A) and to B (including B).

Although the present disclosure describes various embodiments using terms used in some communication standards (e.g., 3rd Generation Partnership Project (3GPP), European Telecommunications Standards Institute (ETSI), extensible radio access network (xRAN), and open-radio access network (O-RAN)), it is only an example for explanation. Various embodiments of the present disclosure may be easily modified and be applied to other communication.

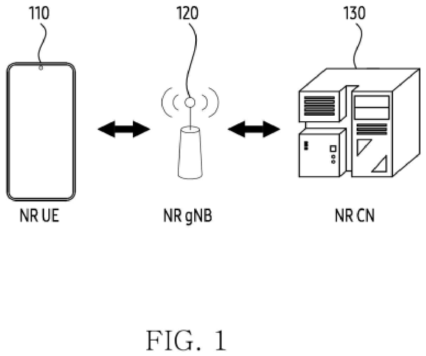

FIG. 1 illustrates a wireless communication system according to embodiments.

Referring to FIG. 1, FIG. 1 illustrates a terminal 110 and a base station 120 as a part of nodes using a wireless channel in a wireless communication system. FIG. 1 illustrates only one base station, but the wireless communication system may further include another base station identical or similar to the base station 120.

The terminal 110 is a device used by a user and performs communication with the base station 120 through a wireless channel. A link from the base station 120 to the terminal 110 is referred to as downlink (DL), and a link from the terminal 110 to the base station 120 is referred to as uplink (UL). In addition, although not illustrated in FIG. 1, the terminal 110 and another terminal may perform communication through a mutual radio channel. In this case, a device-to-device link (D2D) between the terminal 110 and the other terminal is referred to as a sidelink, and the sidelink may be used interchangeably with a PC5 interface. In some other embodiments, the terminal 110 may be operated without user involvement. According to an embodiment, the terminal 110 is a device that performs machine type communication (MTC) and may not be carried by a user. In addition, according to an embodiment, the terminal 110 may be a narrowband (NB)-internet of things (IoT) device.

The terminal 110 may be referred to as 'user equipment (UE)', 'vehicle', 'customer premises equipment (CPE), 'mobile station', 'subscriber station', 'remote terminal', 'wireless terminal', 'electronic device', 'user device' or another term with equivalent technical meaning, in addition to terminal.

The base station 120 is a network infrastructure that provides wireless access to the terminal 110. The base station 120 has a coverage defined based on a distance at which a signal may be transmitted. The terminal 110 may be referred to as 'access point (AP)', 'eNodeB (eNB)', '5th generation node', 'next generation nodeB (gNB)', 'transmission/reception point (TRP)' or another term with equivalent technical meaning, in addition to the base station.

The base station 120 may communicate with a core network entity 130. For example, the core network entity 130 may include an access and management function (AMF). In addition, for example, the core network entity 130 may include a user plane function (UPF).

The terminal 110 may perform beamforming with the base station 120. The terminal 110 and the base station 120 may transmit and receive a radio signal in a relatively low frequency band (e.g., frequency range 1 (FR 1) of NR). In addition, the terminal 110 and the base station 120 may transmit and receive a radio signal in a relatively high frequency band (e.g., FR 2 (or FR 2-1, FR 2-2, FR 2-3), FR 3 of NR), and a mmWave band (e.g., 28GHz, 30GHz, 38GHz, 60GHz). In order to improve a channel gain, the terminal 110 and the base station 120 may perform beamforming. Herein, the beamforming may include transmission beamforming and reception beamforming. The terminal 110 and the base station 120 may assign directivity to the transmission signal or the reception signal. To this end, the terminal 110 and the base station 120 may select serving beams through a beam search or a beam management procedure. After the serving beams are selected, subsequent communication may be performed through a resource in a QCL relationship with a resource used to transmit or receive signals of the serving beams.

If large-scale characteristics of a channel delivering a symbol on a first antenna port may be inferred from a channel delivering a symbol on a second antenna port, the first antenna port and the second antenna port may be evaluated as being in a QCL relationship. For example, the large-scale characteristics may include at least one of delay spread, doppler spread, doppler shift, average gain, average delay, or spatial receiver parameter.

Both the terminal 110 and the base station 120 may perform beamforming, but embodiments of the present disclosure are not limited thereto. In some embodiments, the terminal 110 may or may not perform beamforming. In addition, the base station 120 may or may not perform beamforming. In other words, only one of the terminal 110 and the base station 120 may perform beamforming, or neither the terminal 110 nor the base station 120 may perform beamforming.

In the present disclosure, a beam refers to a spatial flow of a signal in a wireless channel, and is formed by one or more antennas (or antenna elements), and this formation process may be referred to as beamforming. The beamforming may include at least one of analog beamforming or digital beamforming (e.g., precoding). A reference signal transmitted based on beamforming may include, for example, a demodulation-reference signal (DM-RS), a channel state information-reference signal (CSI-RS), a synchronization signal/physical broadcast channel (SS/PBCH), and a sounding reference signal (SRS). In addition, IE such as CSI-RS resource or SRS-resource may be used as a configuration for each reference signal, and the configuration may include information associated with the beam. The information associated with the beam may mean whether the configuration (e.g., CSI-RS resource) uses the same spatial domain filter or a different spatial domain filter with as another configuration (e.g., another CSI-RS resource in the same CSI-RS resource set) or mean which reference signal is quasi-co-located (QCL), or mean what type (e.g., QCL type A, B, C, D) if it is QCL.

Hereinafter, in order to describe embodiments, the terminal may be referred to as a UE 110 and the base station may be referred to as a gNB 120.

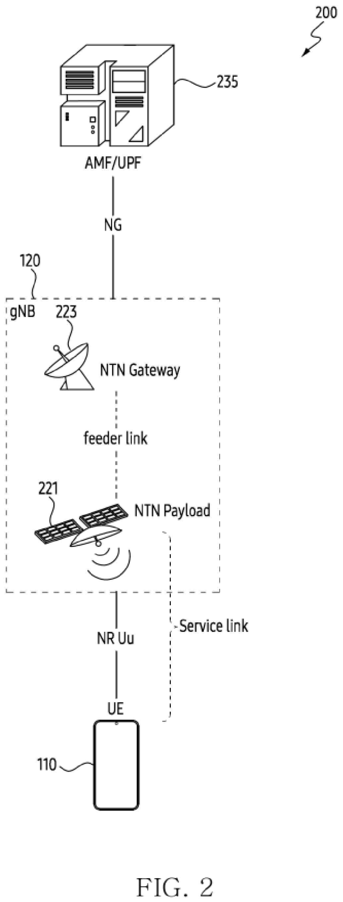

FIG. 2 illustrates an example of a non-terrestrial network (NTN) according to embodiments. The NTN refers to an NG-RAN that provides non-terrestrial NR access to UE (e.g., the UE 110) through NTN payload and NTN gateway mounted on NTN vehicle based on airborne or space-borne. The NG-RAN may include one or more gNBs (e.g., the gNB 120).

Referring to FIG. 2, the NTN 200 may include an NTN payload 221 and an NTN gateway 223 as the gNB 120. The NTN payload 221 is a network node mounted on a high altitude platform station (HAPS) or a satellite that provides a connection function between a service link (described later) and a feeder link (described later). The NTN gateway 223 is an earth station disposed on a surface of the earth that provides a connection to the NTN payload 221 by using the feeder link. The NTN gateway 223 is a transport network layer (TNL) node. The NTN 200 may provide non-terrestrial NR access to the UE 110. The NTN 200 may provide non- terrestrial NR access to the UE 110 through the NTN payload 221 and the NTN gateway 223. A link between the NTN payload 221 and the UE 110 may be referred to as a service link. A link between the NTN gateway 223 and the UE 110 may be referred to as a feeder link. The feeder link may correspond to a wireless link.

The NTN payload 221 may receive wireless protocol data from the UE 110 through the service link. The NTN payload 221 may transparently transmit the wireless protocol data to the NTN gateway 223 through the feeder link. Therefore, the NTN payload 221 and the NTN gateway 223 may be considered as one gNB 120 from perspective of the UE 110. The NTN payload 221 and the NTN gateway 223 may communicate with the UE 110 through a Uu interface, which is a general wireless protocol. In other words, the NTN payload 221 and the NTN gateway 223 may perform wireless protocol communication with the UE 110, such as one gNB 120. The NTN gateway 223 may communicate with a core network entity 235 (AMF or UPF) through an NG interface.

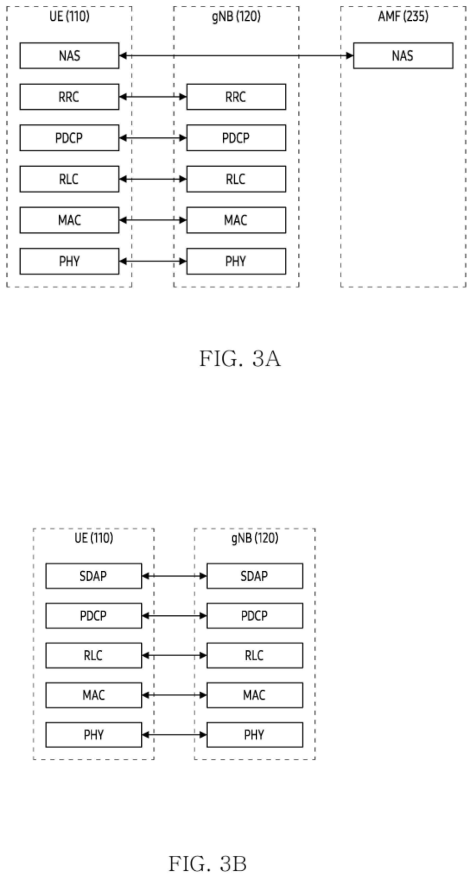

According to an embodiment, the NTN payload 221 and the NTN gateway 223 may use a wireless protocol stack in a control plane of FIG. 3A to be described later. In addition, according to an embodiment, the NTN payload 221 and the NTN gateway 223 may use a wireless protocol stacks in a user plane of FIG. 3B.

In FIG. 2, one NTN payload 221 and one NTN gateway 223 included in the gNB 120 are described, but the embodiments of the present disclosure are not limited thereto. For example, the gNB may include a plurality of NTN payloads. In addition, for example, the NTN payload may be provided by a plurality of gNBs. In other words, an implementation scenario illustrated in FIG. 2 is an example and does not limit embodiments of the present disclosure.

FIG. 3A illustrates an example of a control plane (C-plane) according to embodiments. An NTN payload (e.g., the NTN payload 221) and an NTN gateway (e.g., the NTN gateway 223) may function as gNB (e.g., the gNB 120). Hereinafter, the protocol by the NTN payload and the NTN gateway may be understood as an operation of the gNB 120.

Referring to FIG. 3A, in the C-plane, the UE 110 and an AMF 235 may perform non-access stratum (NAS) signaling. In the C-plane, the UE 110 and the gNB 120 may perform communication according to a protocol designated in each of an RRC layer, a PDCP layer, an RLC layer, a MAC layer, and a PHY layer.

In NTN access, a main function of the RRC layer may include at least a part of the following functions.
- Broadcast system information associated with access stratum (AS) and NAS
- Paging initiated by 5G core (5GC) or next generation-radio access network (NG-RAN)
- Establishment, maintenance and release of RRC connection between UE and NG-RAN including :
   - Add, modify, and release carrier aggregation
   - Add, modify, and release dual connectivity between NR or E-UTRA and NR
- Security function including key management;
- Set up, configuration, maintenance management, and release of Signaling Radio Bearer (SRB) and Data Radio Bearer (DRB)
- Move function including:
   - Handover and context transfer;
   - Control of UE cell selection and reselection and cell selection and reselection;
   - Mobility between RATs
- Quality of service (QoS) management function;
- UE measurement report and control of report;
- Radio link failure detection and recovery
- Message transmission from UE to NAS or from NAS to UE

In NTN access, a main function of the PDCP layer may include at least a part of the following functions.
- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

In NTN access, a main function of the RLC layer may include at least a part of the following functions.
- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

In NTN access, the MAC layer may be connected to a plurality of RLC layer devices configured on a terminal, and a main function of the MAC may include at least a part of the following functions.
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

In NTN access, the physical layer may include channel coding and modulating higher layer data, making into an OFDM symbol, and transmitting to a wireless channel, or demodulating the OFDM symbol received through a wireless channel, channel decoding, and transmitting to a higher layer.

FIG. 3B illustrates an example of a user plane (U-plane) according to embodiments. An NTN payload (e.g., the NTN payload 221) and an NTN gateway (e.g., the NTN gateway 223) may function as gNB (e.g., the gNB 120). Hereinafter, a protocol by the NTN payload and the NTN gateway may be understood as an operation of the gNB 120.

Referring to FIG. 3B, in the U-plane, the UE 110 and the gNB 120 may perform communication according to a protocol designated in each of an SDAP layer, a PDCP layer, an RLC layer, a MAC layer, and a PHY layer. For the PDCP layer, the RLC layer, the MAC layer, and the PHY layer, except for the SDAP layer, the description of FIG. 3A may be referenced.

In NTN access, the SDAP layer may provide a QoS flow of 5GC. A single protocol entity of the SDAP may be configured for each individual PDU session, and a function of the SDAP layer may include at least a part of the following functions.
- Mapping between QoS flow and Data radio bearer;
- Displaying a QoS flow identifier (ID) (QFI), in both DL and UL packet

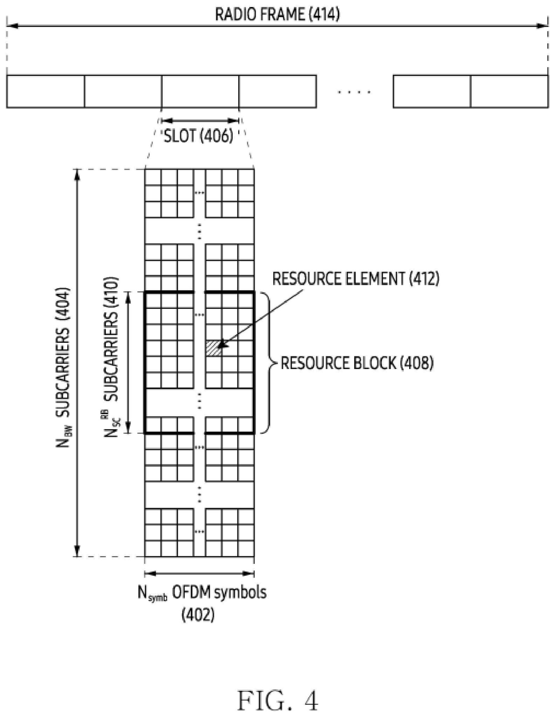

FIG. 4 illustrates an example of a resource structure in a time-frequency domain, in a wireless communication system according to embodiments. FIG. 4 illustrates a basic structure of a time-frequency domain, which is a radio resource area in which data or a control channel is transmitted in a downlink or uplink.

Referring to FIG. 4, a horizontal axis indicates a time domain and a vertical axis indicates a frequency domain. A minimum transmission unit in the time domain is an OFDM symbol, and N_{symb} OFDM symbols 402 are gathered to form one slot 406. A length of a subframe is defined as 1.0 ms, and a length of a radio frame 414 is defined as 10 ms. A minimum transmission unit in the frequency domain is a subcarrier, and a carrier bandwidth configuring a resource grid is configured with N_{BW} subcarriers 404.

In the time-frequency domain, a basic unit of resources is a resource element (hereinafter, 'RE') 412, which may be represented as an OFDM symbol index and a subcarrier index. A resource block may include a plurality of resource elements. In an LTE system, the resource block (RB) (or physical resource block (hereinafter, 'PRB') is defined as N_{symb} consecutive OFDM symbols in the time domain and N_{SC}^{RB} consecutive subcarriers in the frequency domain. In an NR system, the RB 408 may be defined as N_{SC}^{RB} consecutive subcarriers 410 in the frequency domain. One RB 408 includes N_{SC}^{RB} REs 412 on the frequency axis. In general, a minimum transmission unit of data is RB, and a number of subcarriers is N_{SC}^{RB}=12. The frequency domain may include common resource blocks (CRBs). The PRB may be defined in a bandwidth part (BWP) in the frequency domain. The CRB and PRB numbers may be determined according to subcarrier spacing. A data rate may increase in proportion to a number of RBs scheduled for the terminal.

In the NR system, a downlink transmission bandwidth and an uplink transmission bandwidth may be different, in case of a frequency division duplex (FDD) system that operates by dividing downlink and uplink by frequency. A channel bandwidth indicates a radio frequency (RF) bandwidth corresponding to a system transmission bandwidth. Table 1 shows a part of a correspondence between the system transmission bandwidth, subcarrier spacing (SCS) and channel bandwidth defined in the NR system in a frequency band (e.g., a frequency range (FR) 1 (410 MHz to 7,125 MHz)) lower than x GHz. And Table 2 shows a part of a correspondence relationships between a transmission bandwidth, subcarrier spacing, and channel bandwidth defined in the NR system in a frequency band (e.g., FR2 (24,550 MHz - 52,600 MHz) or FR2-2 (52,600 MHz to 71,000 MHz)) higher than yGHz. For example, in an NR system having a 100 MHz channel bandwidth at 30 kHz subcarrier spacings, a transmission bandwidth is configured with 273 of RBs. In Table 1 and Table 2, N/A may be a bandwidth-subcarrier combination that is not supported by the NR system.

**[Table 1]**

| | | | | | | | |
|---|---|---|---|---|---|---|---|
| channel bandwidth [MHz] | SCS | 5 | 10 | 20 | 50 | 80 | 100 |
| transmission bandwidth configuration | 15kHz | 25 | 52 | 106 | 207 | N/A | N/A |
| | 30kHz | 11 | 24 | 51 | 133 | 217 | 273 |
| N_{RB} | 60kHz | N/A | 11 | 24 | 65 | 107 | 135 |

**[Table 2]**

| | | | | | |
|---|---|---|---|---|---|
| channel bandwidth [MHz] | SCS | 50 | 100 | 200 | 400 |
| transmission bandwidth configuration | 60kHz | 66 | 132 | 264 | N/A |
| | 120kHz | 32 | 66 | 132 | 264 |
| N_{RB} | | | | | |

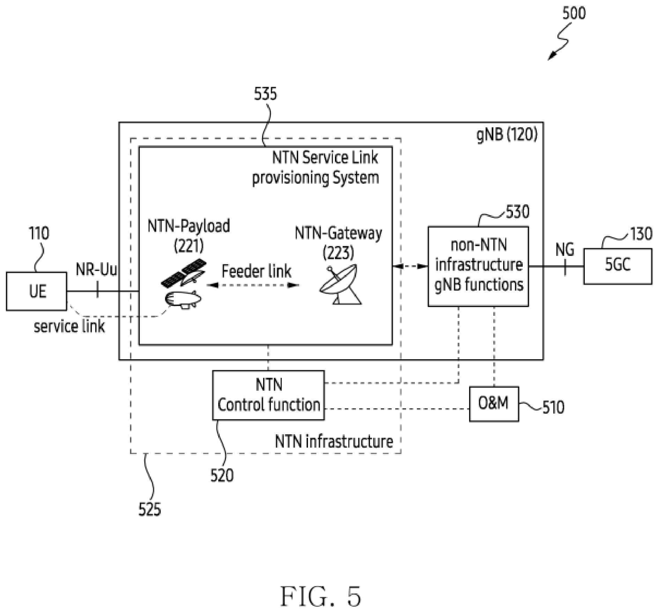

FIG. 5 illustrates an example of implementing an NTN according to an embodiment.

Referring to FIG. 5, an NTN 500 may include an NTN payload 221 and an NTN gateway 223 as a gNB 120. The NTN payload 221 may be mounted on a spacecraft (or airline) vehicle and provide structure, power, command, telemetry, posture control to satellites (corresponding HAPS), suitable thermal environment, and radiation shielding.

For operation of the NTN 500, operation and maintenance (O&M) 510 may provide one or more parameters associated with the NTN 500 to the gNB 120. The O&M 510 may control an NTN control function 520 and a non-NTN infrastructure gNB function 530.

The NTN control function 520 may control a spacecraft (or airline) vehicle as well as a radio resource of the NTN infrastructure 525 (the NTN payload 221 and the NTN gateway 223). In addition, the NTN control function 520 may provide control data (e.g., ephemeris information) to the non-NTN infrastructure gNB function 530.

The gNB 120 may be subdivided into the non-NTN infrastructure gNB function 530 and an NTN service link provisioning system 535. The NTN infrastructure 525 may be subdivided into the NTN control function 520 and the NTN service link provisioning system 535. The NTN service link provisioning system 535 may configured with one or more NTN payloads (e.g., the NTN payload 221) and an NTN gateway (e.g., the NTN gateway 223). The NTN service link provisioning system 535 may map an NR-Uu radio protocol to a radio resource (e.g., beam, channel, Tx power) of the NTN infrastructure 525.

The operation and maintenance (O&M) 510 may provide at least the following NTN-related parameters to the gNB 120 for operation.
a) Earth fixed beams: for each beam provided by a given NTN payload:
   - Cell identifier (NG and Uu) mapped to beam
   - Reference position of cell (e.g., center and range of cell)
b) quasi-earth fixed beams: for each beam provided by a given NTN payload:
   - Cell identifier (NG and Uu) and time windows mapped to beam;
   - Reference position of cell/beam (e.g., center and range of cell)
   - Time window (feeder link, service link) of consecutive switch-over
   - Identifier and time window of all satellites and NTN gateways that provide services
c) Earth moving beams: for each beam provided by a given NTN payload:
   - Mapping information on fixed geographic area reported to NG and Uu cell identifier mapped to the beam, information on movement of foot-print of the beam on Earth
   - Elevation for NTN payload;
   - Consecutive service schedule of NTN-Gateways/gNBs;
   - Consecutive switch-over schedule (feeder link, service link)

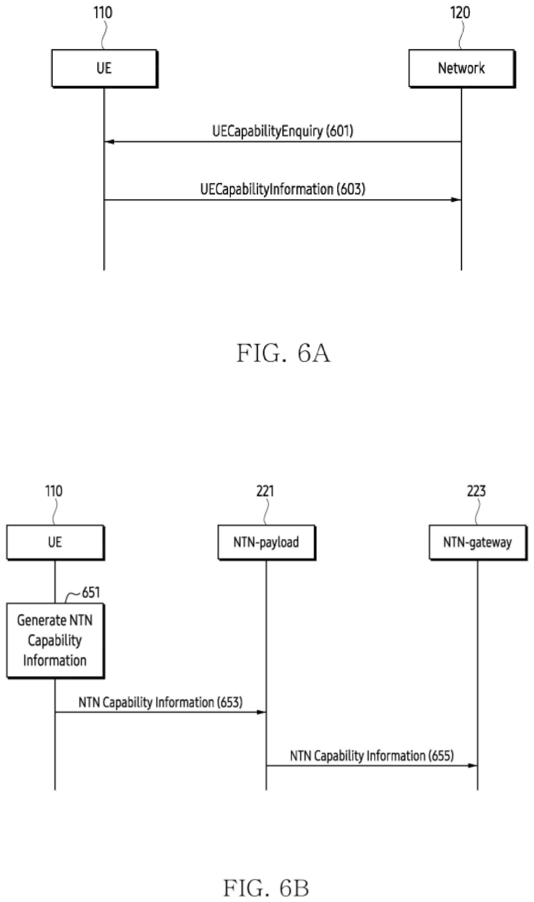

FIGS. 6A and 6B illustrate an example of signaling for providing user equipment (UE) capability information according to an embodiment. A network may initiate a procedure with a RRC-connected UE 110 to obtain UE radio access capability information. A base station 120 is illustrated as a network, but operations of the base station 120 may be performed by the NTN payload 221 and the NTN gateway 223 in the above-described NTN. The NTN gateway 223 may transmit a message to the UE 110 or receive a message from the UE 110, through the NTN payload 221.

Referring to FIG. 6A, in operation 601, the base station 120 may transmit an enquiry message to the UE 110. For example, the base station 120 may transmit a UECapabilityEnquiry message to the UE 110. The base station 120 may initiate a procedure with UE 110 connected with RRC to obtain the UE radio access capability information to the connected UE 110. The base station 120 may transmit the enquiry message to the UE 110 through radio resource control (RRC) signaling.

In operation 603, the UE 110 may transmit a capability information message to the base station 120. The UE 110 may transmit the capability information message to the base station 120 in response to the enquiry message of operation 601. For example, the UE 110 may transmit UECapabilityInformation message to the base station 120. The capability information message may include capability information of the UE 110. The capability information message may include capability information according to radio access technology (RAT) of the UE 110. The capability information of the UE 110 according to embodiments may include information on capability of the UE 110 associated with the NTN. According to an embodiment, the capability information of the UE 110 may include information on whether a specific function associated with NTN is supported. In addition, according to an embodiment, the capability information of the UE 110 may indicate a support mode or performance of the UE 110 associated with the NTN. In addition, according to an embodiment, the capability information of the UE 110 may include information required by the network for the NTN (e.g., UE position, UE coordinates, GNSS). Hereinafter, the capability information of the UE 110 configured for the NTN may be referred to as NTN capability information. In the present disclosure, the NTN capability information may be used as a term to refer to all of parameters for the NTN distinct from terrestrial network (TN), indicators indicating whether it is supported, and support values.

Referring to FIG. 6B, in operation 651, the UE 110 may generate NTN capability information. The NTN capability information may include at least one of parameters for the NTN, indicators indicating whether it is supported, or support values. According to an embodiment, the NTN capability information may include at least one NTN parameter. The NTN parameter may be associated with a function for each layer (e.g., the physical layer and the MAC layer of FIGS. 3A and 3B) for NTN.

According to an embodiment, the NTN capability information may include at least one indicator. The indicator may indicate whether a specific function is supported. For example, the indicator may indicate whether the UE 110 supports multiple polarization. In addition, for example, the indicator may indicate whether the UE 110 supports a position estimation function using GNSS. In addition, for example, the indicator may indicate whether the UE 110 supports a HARQ disabling function. In addition, for example, the indicator may indicate whether the UE 110 supports a specific position estimation technique.

According to an embodiment, the NTN capability information may include at least one value. For example, the value may refer to a maximum value of a specific parameter. A number of HARQ processes may increase due to increasing round trip time (RTT). Accordingly, the NTN capability information may include a maximum value of HARQ processes. As another example, the value may refer to an allowance value for processing delay. Timing of uplink transmission is adjusted by timing advance (TA), and the TA increases in proportion to the RTT. Therefore, for uplink transmission using increased TA in the NTN, the base station 120 may be required to identify whether an allowance value for each parameter (e.g., buffer size) of the UE 110 is sufficient.

In operation 653, the UE 110 may transmit the NTN capability information to the NTN payload 221. The UE 110 may transmit a UE capability information message including the NTN capability information to the NTN payload 221 through RRC signaling. The UE 110 may transmit the UE capability information message to the NTN payload 221 through a Uu interface, that is, the service link.

In operation 655, the NTN payload 221 may transmit the NTN capability information to the NTN gateway 223. The NTN payload 221 may transmit the NTN capability information to the NTN gateway 223 through a feeder link. The NTN gateway 223 may function as a gNB based on the NTN payload 221.

The NTN capability information described through operations 601 to 603, and 651 to 655 may include information required for the network to provide NTN access to the UE 110. From Release 17, 3GPP has standardized specific information on the NTN. The capability information associated with the NTN is as follows.

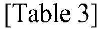

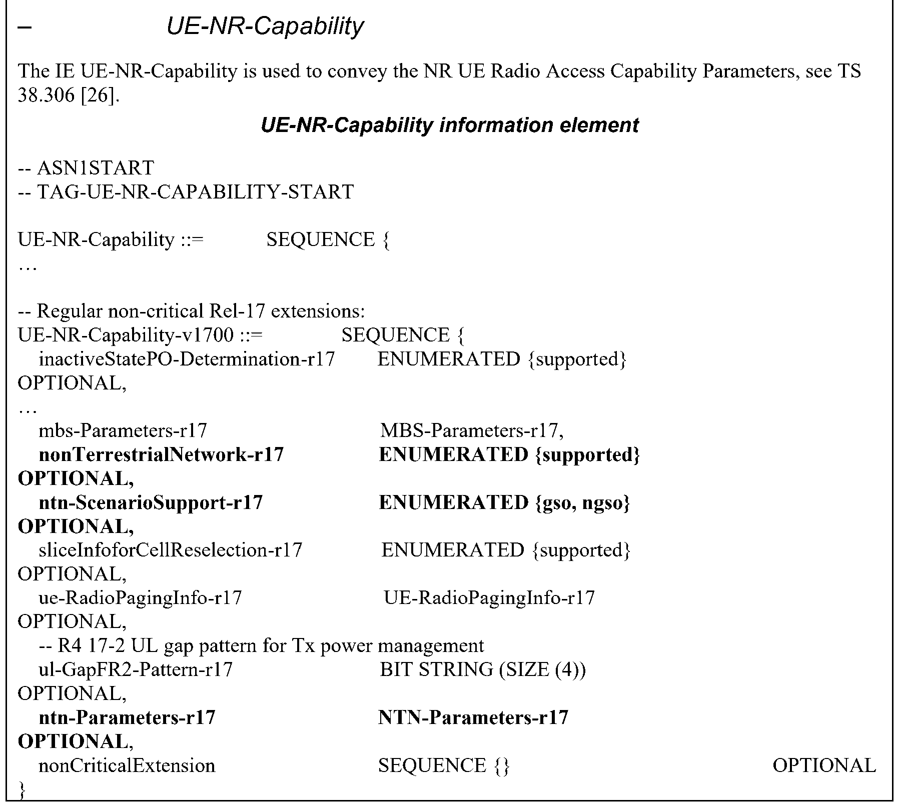

'nonTerrestrial Network-r17' may indicate whether the UE supports NR NTN access, and 'ntn-ScenarioSupport-r17' may indicate whether the UE supports NTN functions in a geostationary satellite orbit (GSO) scenario or a non-geostationary satellite orbit (NGSO) scenario. 'ntn-Parameters-r17' refers to a subset of UE radio access capability parameters for the NTN access, in case that a difference with TN access is present.

Although various scenarios and various functions are continuously proposed for the NTN, there is a problem that aforementioned capability information is an extension of parameters used in the TN or is insufficient to accommodate the proposed NTN functions. Therefore, embodiments of the present disclosure propose additional NTN capability information to accommodate all of the proposed NTN functions. In order to provide network access to the UE 110, a network (e.g., the base station 120) may initiate a UE capability transfer procedure. If the base station 120 uses a separate reporting message instead of existing capability information message to perform a specific function in the NTN, not only radio resources are wasted, but also procedural delays occur. Therefore, in embodiments of the present disclosure, a method of using the UE capability delivery procedure is described in case that reporting of the UE 110 is required or in case of information specific to the UE 110. By including additional information in the NTN capability information in addition to currently defined UE capability information, the network may provide high-performance NTN access to the UE 110. The UE 110 may include information additionally defined for the NTN in UE capability information message (or the NTN capability information in FIG. 6B) of operation 603, and transmit the UE capability information message to the NTN payload 221 and the NTN gateway 223.

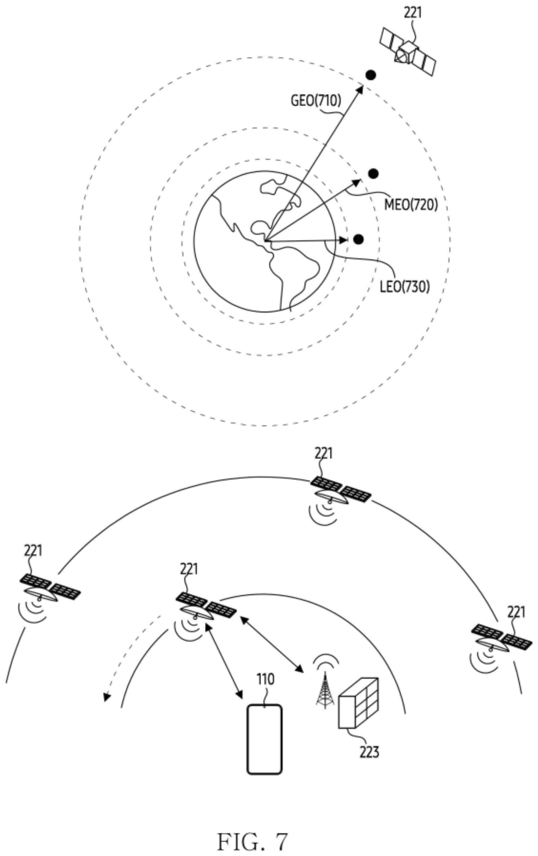

Hereinafter, in FIGS. 7 to 10, new function is described, and NTN capability information including parameters associated with the new function, whether each of the functions is supported, and information on a value or number of the parameters is proposed.

FIG. 7 illustrates examples of coverage extension in an NTN according to an embodiment. As demand for the NTN increases, NR standard has been agreed to additionally support various scenarios to improve NTN-based NG-RAN. For example, deployment in frequency bands of 10 GHz or higher may be supported in order for the NTN. In addition, for example, mobility and service continuity improvement may be provided in consideration of NTN characteristics such as large propagation delay and satellite movement.

Referring to FIG. 7, a satellite refers to a space-borne vehicle that wears a bent pipe payload or a regenerative payload communication transmitter. The satellite may be disposed on GEO 710, MEO 720, or LEO 730. Types of NTN may be illustratively summarized as shown in the following table.

**[Table 4]**

| Platforms | Altitude range | Orbit | Typical beam footprint size |
|---|---|---|---|
| Low-Earth Orbit (LEO) satellite | 300 - 1500 km | Circular around the earth | 100 - 1000 km |
| Medium-Earth Orbit (MEO) satellite | 7000 - 25000 km | | 100 - 1000 km |
| Geostationary Earth Orbit (GEO) satellite | 35 786 km | notional station keeping position fixed in terms of elevation/azimuth with respect to a given earth point | 200 - 3500 km |
| UAS platform (including HAPS) | 8 - 50 km (20 km for HAPS) | | 5 - 200 km |
| High Elliptical Orbit (HEO) satellite | 400 - 50000 km | Elliptical around the earth | 200 - 3500 km |

To provide mobility and service continuity improvement in increasing scenarios, the UE 110 according to embodiments of the present disclosure may provide the NTN capability information including additional support information to a network (e.g., eNB, gNB 120, NTN payload 221, and NTN gateway 223). To this end, the UE 110 may generate the NTN capability information.

According to an embodiment, the UE 110 may generate the NTN capability information including a scenario mode. In current NR standard, the UE 110 only indicates whether it is GSO or NGSO, but various scenarios are possible within NGSO, according to altitude of satellite (e.g., NTN payload 221). As altitude increases, power performance and reception performance required by the UE 110 and satellite antenna-related performance become more sensitive, so it may be necessary to distinguish between various scenarios that may be supported within the NGSO. For example, the UE 110 may support a scenario mode as shown in the following table.

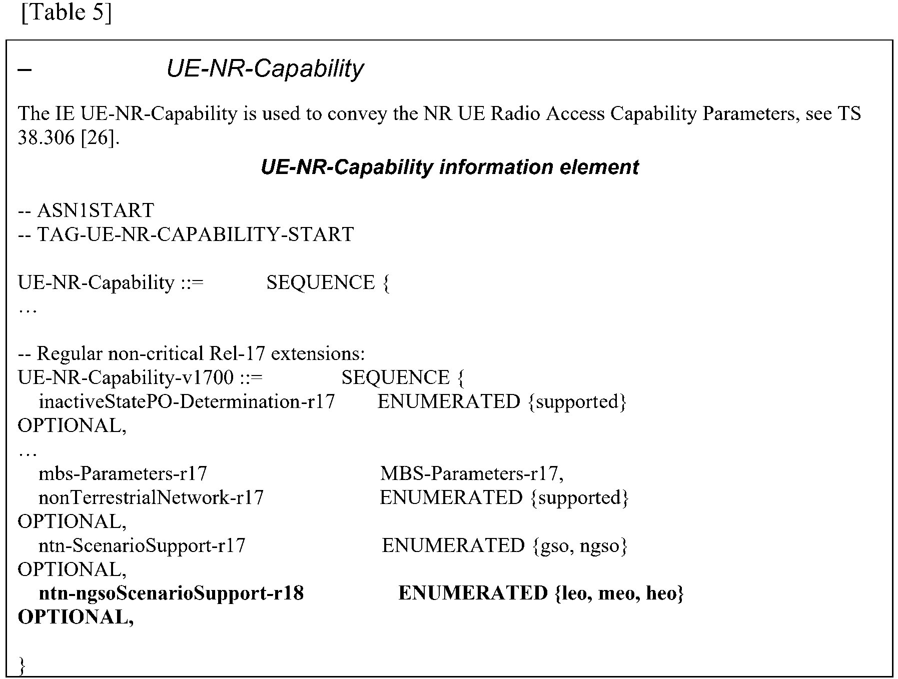

Variable names in Table 5 are exemplary, and 'ngso1', 'ngso2', and 'ngso3' may be used instead of 'leo', 'meo', and 'heo'. In addition, Table 5 exemplifies capability information to indicate one of NGSO's detailed scenarios, but scenario related orbit information may be used as NTN capability information instead of scenario information. For example, orbit information included in the NTN capability information may indicate circular orbit around the earth or elliptical orbit around the earth.

According to an embodiment, the UE 110 may generate the NTN capability information associated with a satellite. The UE 110 may be connected to one or more satellites. From perspective of the UE 110, each NTN payload may correspond to an independent base station or an independent cell. However, unlike the TN, the NTN may have a limited number of base stations capable of simultaneously accessing, according to a physical distance and performance of the antenna used. Accordingly, the UE 110 may generate the NTN capability information including information indicating a number of simultaneously accessible satellites. For example, the UE 110 may provide access support information as shown in the following table.

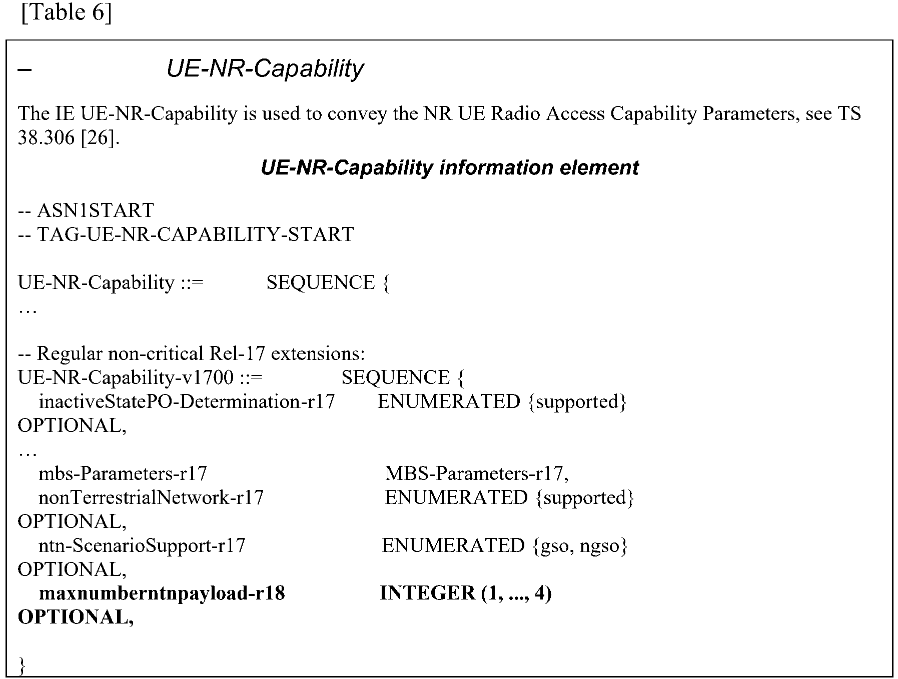

Table 6 illustrates a maximum number of accessible NTN payloads, but embodiments of the present disclosure are not limited thereto. According to another embodiment, whether dual connectivity with a cell provided by the NTN payloads and TN cells is supported may be used as capability information. In addition, additional capability information may be defined for measurement of adjacent NTN payloads similar to a neighbor cell. According to an embodiment, information on a number of SSB-based RRM Measurement Timing Configuration window (SMTC) per carrier operatable by the UE 110 may be used as the NTN capability information. In addition, according to an embodiment, information on a measurement gap for inter-frequency measurement may be used as the NTN capability information.

According to an embodiment, the UE 110 may generate the NTN capability information including polarization information. A satellite antenna of the UE 110 may provide at least one polarization. For example, the satellite antenna of the UE 110 may provide a plurality of polarizations. The plurality of polarizations may be orthogonal to each other. For example, the plurality of polarizations may include a first polarization and a second polarization. Each polarization may be linear polarization, circular polarization (e.g., right hand circular polarization (RHCP) and left hand circular polarization (LHCP)), or elliptical polarization. As another example, the satellite antenna of the UE 110 may provide a single polarization. For example, the UE 110 may support a scenario mode as shown in the following table.

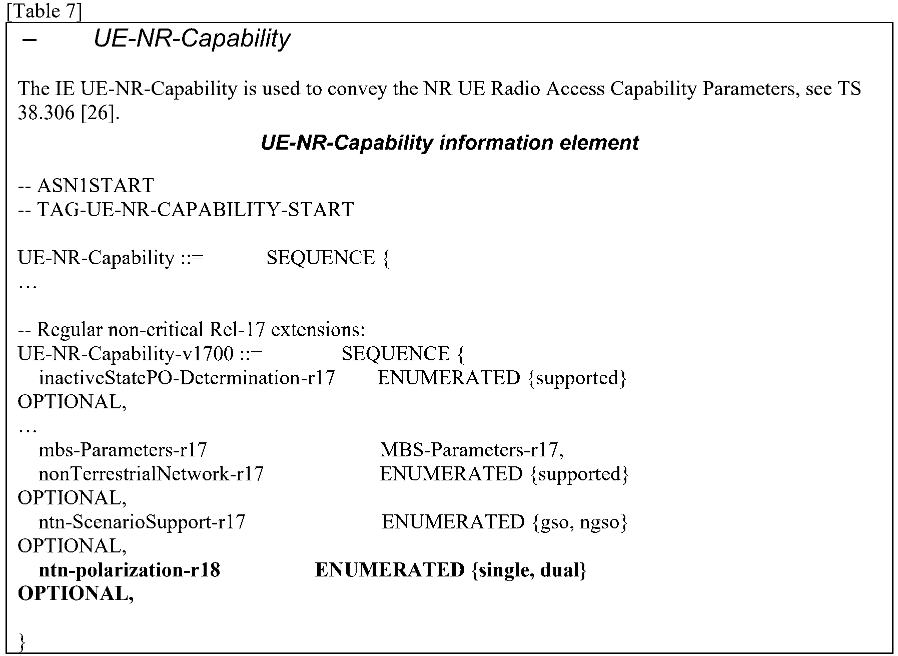

In Table 7, whether it is single or double polarization is only illustrated, but a specific polarization type (e.g., linear polarization, circular polarization) may be used as the NTN capability information, instead of polarization mode.

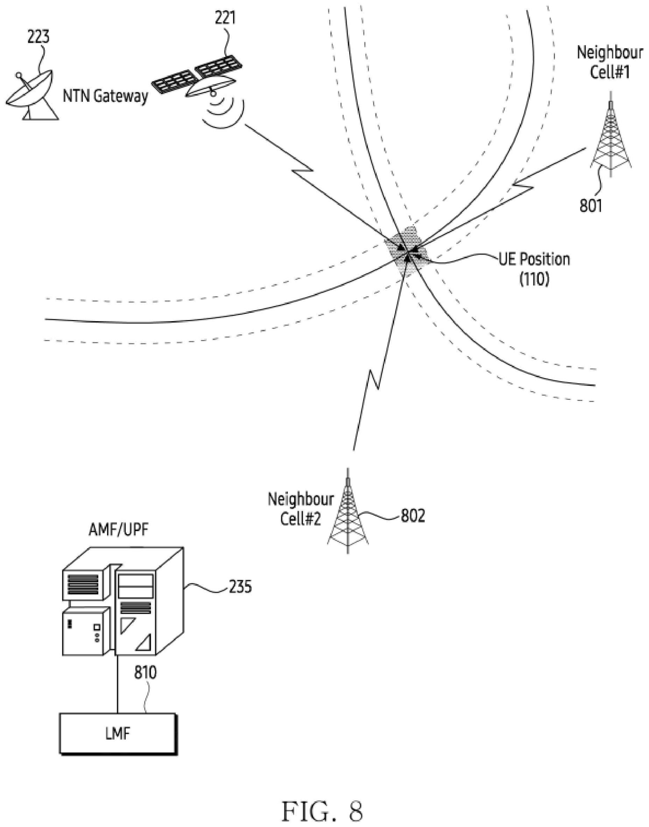

FIG. 8 illustrates examples of a positioning method for a network-verified UE position in an NTN according to an embodiment. The UE may report a position to a network (e.g., base station, core network). However, it is difficult to guarantee reliability only with the reported position of the UE. Therefore, verification of network for the UE position is required. The verification of the network should be performed independently of the position information reported by the UE. For example, if the reported UE position matches network-based information within 5-10km (similar to terrestrial network macro cell size), the reported UE position may be considered verified.

Referring to FIG. 8, the NTN is not sufficient with an existing terrestrial mechanism that obtains UE position information through cell ID information due to inherently large cell size. A ground cell size may be in a range of 5-10 km, and a network-verification accuracy requirement may need to meet at least this requirement. Various positioning methods may be used to verify a position of the UE 110. According to an embodiment, RAT-dependent positioning methods of 3GPP may be used for network-verification of UE position. For example, multi-RTT technique may be used for network-verification of UE position. In addition, for example, time difference of arrival (DL/UL-TDOA) technique may be used for network-verification of UE position.

The NTN payload 221 may function as a transmission reception point (TRP) from a gNB perspective. In the multi-RTT positioning method, the UE position may be estimated based on measurements in both of the UE 110 and TRPs (e.g., the NTN payload 221, the base station 801, and base station 802). The measurements may include receive (RX) - transmit (TX) time difference measurements (optionally, DL-PRS-RSRP, UL-SRS-RSRP) between the UE 110 and the TRP, which are used to determine RTT in a location management function (LMF) 810.

In DL-TDOA positioning method, the UE position may be estimated based on reference signal time difference Measurement (DL RSTD) (optionally, DL-PRS-RSRP) taken by downlink radio signals from several TRPs in the UE and relative downlink timing, along with information on geographical coordinate of TRPs. In the UL-TDOA positioning method, the UE position may be estimated based on relative time of arrival (UL-RTOA) taken by uplink signals from the UE 110 in each TRP.

The TRPs may be used to estimate a position of the UE 110. Each of the TRPs may form a base station and may be connected to the AMF 235. For example, a base station 801 and a base station 802, which are a TN base station, may be connected with the AMF 235 through an N2 interface. In addition, for example, the NTN payload 221 may be connected with the AMF 235 through the NTN gateway 223. The AMF 235 may be connected with the LMF 810. The LMF 810 may determine a position of the UE 110.

In order to verify a position of the UE 110, position estimation techniques used in 3GPP may be used intactly. Since a relationship between a satellite and an NTN system should be considered, at least a part of methods used in the 3GPP may not be suitable for estimating a position of the UE 110. For example, the UL-TDOA method may require that a number of TRPs connected to the UE 110 is at least three. However, it may be difficult for the UE 110 to access three TRPs simultaneously, including the NTN payload 221. In addition, due to performance limitation of the UE 110, calculation for long RTT or angle estimation may not be easy. In order to evaluate RAT-based positioning methods, the following parameters may be considered.

**[Table 8]**

| Parameter |
|---|
| Scenarios (Rural, LOS) |
| Satellite Orbit (600km, 1200km) |
| Satellite parameters |
| Channel model/ Delay spread |
| FR/Carrier frequency |
| BW |
| Subcarrier spacing, kHz |
| Number of satellite in view |
| Orbit inclination |
| UE type (handheld, VSAT(Very Small Aperture Terminals)) |
| UE related parameters |
| Positioning signals |
| Reference Signal Physical Structure and Resource Allocation (RE pattern) |
| RS type of sequence/number of ports |
| Number of symbols used per occasion |
| number of occasions used per positioning estimate |
| Time window for measurement collection |
| Interference modelling (ideal muting, or other) |
| Reference Signal Transmission Bandwidth |
| Reference point for timing measurement (satellite, TN gNB) |
| Description of positioning technique / applied positioning algorithm |
| UE speed (e.g., 3km/h) |
| Maximum timing measurement error |
| Performance metrics (accuracy) |
| Additional notes, if any |

To determine which positioning technique is appropriate, the UE 110 may provide a base station (e.g., NTN payload 221) with the NTN capability information including at least a part of the described-above parameters. The NTN capability information may be used for a position estimation of the UE 110 in the LMF 810. According to an embodiment, at least a part of the parameters included in Table 8 may be included in the UE capability information message (or the NTN capability information in FIG. 6B) of operation 603. The UE 110 may transmit the UE capability information message to the NTN payload 221 and the NTN gateway 223.

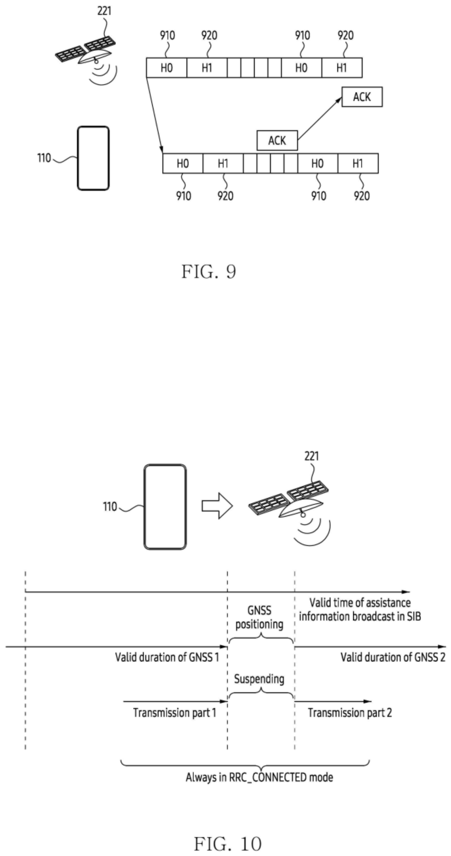

FIG. 9 illustrates an example of disabling hybrid automatic repeat and request (HARQ) in an NTN according to an embodiment. In NTN environment, due to large RTT delay, HARQ stalling affects throughput. To solve reduction in throughput, disabling HARQ is introduced for the NTN. According to disabling HARQ, RAN 1 standard allows the base station to send a next PDSCH transmission in the same HARQ process (initial or retransmission) after the UE completes the PDSCH process. After the PDSCH processing, the UE may transmit HARQ-ACK feedback. Disabling HARQ means that even if propagation delay between the base station and the UE is large, there is no need to wait for the UE to complete receiving the PDSCH before sending the next PDSCH in the same HARQ process. In other words, after transmitting the PDSCH, the base station may schedule the next PDSCH after a predetermined time. Since the base station has not yet received HARQ-ACK feedback, the next PDSCH of the base station may be scheduled with a new transmission (including new data indicator (NDI) bit toggling).

Referring to FIG. 9, a plurality of HARQ processes may be operated. A first HARQ process 910 and a second HARQ process 920 may operate in parallel. In the first HARQ process 910, the base station 120 (e.g., the NTN payload 221) may transmit PDSCH data to the UE 110. Regardless of the HARQ-ACK feedback on the PDSCH data of the first HARQ process 910, the base station 120 may transmit other PDSCH data to the UE 110, in the second HARQ process 920. As a plurality of HARQ processes are operated more considerably, problem of throughput reduction due to increasing RTT in the NTN environment may be solved. On the other hand, since disabling HARQ is performed every HARQ process, HARQ delay does not occur due to other HARQ processes in the UE 110 in which a plurality of HARQ processes are configured even if HARQ feedback is disabled in one HARQ process. In other words, since the HARQ delay occurs at the UE 110 in which one HARQ process is configured, disabling HARQ may be applied to the UE 110 configured with one HARQ process.

On the other hand, in case that the HARQ-ACK feedback is disabled in the HARQ process configured at the UE 110, the throughput increases, but there is a weak problem in link adaptation. In other words, throughput and link adaptation are trade-off relationships. Since modulation and coding scheme (MCS) per transport block (TB) of the HARQ process is a result of link adaptation, the UE 110 may perform feedback on ACK/NACK separately from the HARQ retransmission to reflect a channel change. In other words, disabling HARQ simply means not performing HARQ retransmission according to feedback, but does not limit ACK/NACK feedback of the UE 110.

Since the base station 120 should allocate uplink resource for the ACK/NACK feedback of the UE 110 and determine whether to perform an operation for link adaptation, the base station 120 needs to identify whether to perform the ACK/NACK feedback even if the UE 110 supports disabling HARQ. The UE 110 may transmit the NTN capability information to the base station 120 so that the base station 120 may allocate uplink resources for an optimal HARQ-ACK codebook (i.e., HARQ-ACK feedback) to the UE 110 and configure optimization of link adaptation operations. According to an embodiment, the UE 110 may transmit UE capability information indicating whether the ACK/NACK feedback is transmitted in an inactivated HARQ process, to the base station 120.

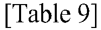

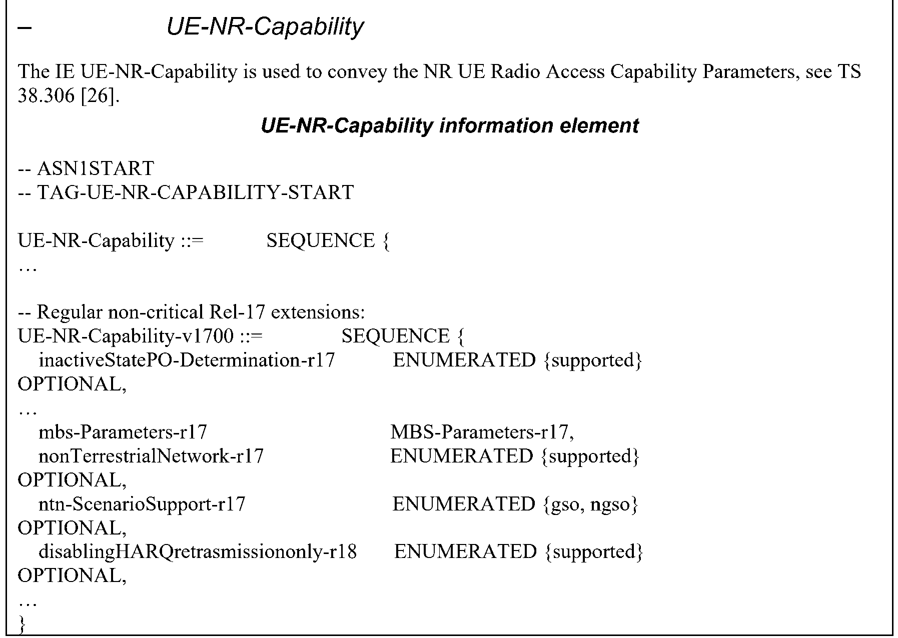

'*harq-FeedbackDisabled-r17'* IE defined in current NR standard indicates whether HARQ feedback is supported. However, the information does not support retransmission according to the HARQ feedback, but it is not clear whether feedback of the HARQ-ACK codebook according to ACK/NACK is possible or feedback from the HARQ-ACK codebook is also impossible. In addition, since computational ability of the UE 120 or ability for the size of a soft buffer is required to achieve link adaptation (e.g., MCS level adjustment) according to ACK/NACK, the UE 120 may transmit UE capability information to indicate whether ACK/NACK feedback is transmitted in the inactivated HARQ process, to the base station 120.

FIG. 10 illustrates an example of global navigation satellite system (GNSS) assistance information in an NTN according to an embodiment.

Referring to FIG. 10, the UE 110 may transmit GNSS assistance information to a base station (e.g., the NTN payload 221). The GNSS assistance information may include a GNSS position fixed time interval and a GNSS valid interval (validity duration) for measurement. When the base station triggers the UE 110 to perform GNSS measurement, the UE 110 may re-acquire GNSS position fixing. For example, in IoT-NTN, simultaneous operation of GNSS and NTN NB-IoT/eMTC does not work for the UE. Accordingly, reacquiring of GNSS position may fail at a long RRC connection time. When GNSS becomes outdated, it is required to use a designated technique to ensure a new expiration date for GNSS to maintain a long connection time. According to an embodiment, the UE 120 may re-acquire GNSS position fixing based on a new gap. The new gap defined in time domain may be used. The UE 110 may maintain a RRC connection mode during the gap, but may stop UL transmission (e.g., belonging to one scheduled PUSCH transmission or another transmission) at the end of a valid period of the GNSS. In case of acquiring new GNSS information, the UE may resume transmission again. Since it is difficult for GNSS and communication (e.g., IoT communication) to operate simultaneously, a gap for acquiring GNSS may be defined.

The gap for reacquiring GNSS may be configured by the base station for the UE 110. However, a length of the gap for reacquiring GNSS should be determined in consideration of a time when the UE 110 switches a communication module to a GNSS module, a driving time of the GNSS module, and a time when the GNSS module is switched back to the communication module. In addition, since the length of the gap for reacquiring GNSS is affected by a communication period of the UE 110 or performance of the GNSS module itself, the UE 110 is required to provide information on the gap to the base station in advance. According to an embodiment, the UE 110 may generate NTN capability information including information on the gap for reacquiring GNSS. For example, the UE 110 may provide gap support information as shown in the following table.

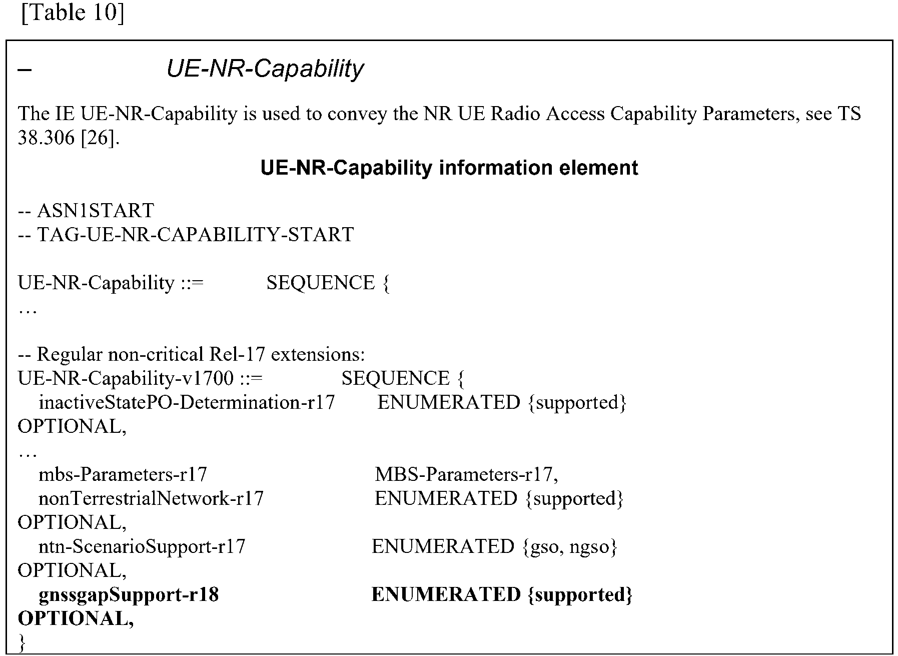

In FIG. 10, whether gap information is supported is only described, but embodiments of the present disclosure are not limited thereto. The NTN capability information may further include other information in addition to whether the gap for reacquiring GNSS is supported. According to an embodiment, the NTN capability information may further include information on a length of the gap, whether a plurality of gaps may be operated, or a maximum value of the gap.

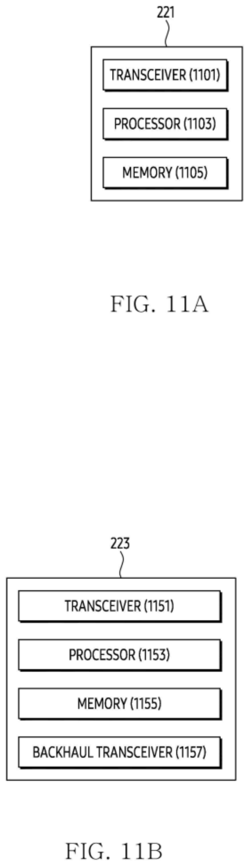

FIG. 11A illustrates components of an NTN payload according to an embodiment. The NTN payload exemplifies the NTN payload 221. A term such as '...unit' and '...er' used below refer to a unit that process at least one function or operation, and may be implemented as hardware or software, or a combination of hardware and software.

Referring to FIG. 11A, the NTN payload 221 may include a transceiver 1101, a processor 1103, and a memory 1105.

The transceiver 1101 performs functions for transmitting and receiving a signal through a wireless channel. For example, the transceiver 1101 up-converts baseband signal into RF band signal and transmits it through an antenna, and down-converts the RF band signal received through the antenna into the baseband signal. For example, the transceiver 1101 may include a transmission filter, a reception filter, an amplifier, a mixer, an oscillator, a DAC, an ADC, and the like.

The transceiver 1101 may include a plurality of transmission/reception paths. Furthermore, the transceiver 1101 may include an antenna unit. The transceiver 1101 may include at least one antenna array configured with a plurality of antenna elements. In terms of hardware, the transceiver 1101 may be configured with a digital circuit and an analog circuit (e.g., a radio frequency integrated circuit (RFIC)). Herein, the digital circuit and the analog circuit may be implemented as one package. In addition, the transceiver 1101 may include a plurality of RF chains. The transceiver 1101 may perform beamforming. The transceiver 1101 may apply a beamforming weight to a signal in order to give directivity according to settings of the processor 1103 to the signal to be transmitted and received. According to an embodiment, the transceiver 1101 may include a radio frequency (RF) block (or RF unit).

The transceiver 1101 may transmit and receive a signal on a radio access network. For example, the transceiver 1101 may transmit a downlink signal. The downlink signal may include a synchronization signal (SS), a reference signal (RS) (e.g., cell-specific reference signal (CRS), demodulation (DM)-RS), system information (e.g., MIB, SIB, remaining system information (RMSI), other system information (OSI)), a configuration message, control information, or downlink data. In addition, for example, the transceiver 1101 may receive an uplink signal. The uplink signal may include a random access-related signal (e.g., random access preamble (RAP) or message 1 (Msg1), message 3 (Msg3)), a reference signal (e.g., sounding reference signal (SRS), DM-RS), or power headroom report (PHR). In FIG. 11A, only the transceiver 1101 is illustrated, but according to another implementation, the NTN payload 221 may include two or more RF transceiver.

The processor 1103 controls overall operations of the NTN payload 221. The processor 1103 may be referred to as a control unit. For example, the processor 1103 transmits and receives a signal through the transceiver 1101. In addition, the processor 1103 writes and reads data to and from the memory 1105. In addition, the processor 1103 may perform functions of a protocol stack required by communication standard. In FIG. 11A, only the processor 1103 is illustrated, but according to another implementation, the NTN payload 221 may include two or more processors. The processor 1103 is a set of instructions or a code stored in the memory 1105, and may be instruction/code that are at least temporarily resided in the processor 1103, or a storage space where instructions/code are stored, or may be part of a circuit configuring the processor 1103. In addition, the processor 1103 may include various modules for performing communication. The processor 1103 may control the NTN payload 221 to perform operations according to embodiments.

The memory 1105 stores data such as a basic program, an application program, and setting information for operation of the NTN payload 221. The memory 1105 may be referred to as a storage unit. The memory 1105 may be configured as a volatile memory, a nonvolatile memory, or a combination of the volatile memory and the nonvolatile memory. In addition, the memory 1105 provides stored data according to a request of the processor 1103. According to an embodiment, the memory 1105 may include a memory for a condition, a command, or a setting value associated with an SRS transmission scheme.

FIG. 11B illustrates components of an NTN gateway according to an embodiment. The NTN gateway exemplifies the NTN gateway 223. A term such as '...unit' and '...er' used below refer to a unit that process at least one function or operation, and may be implemented as hardware or software, or a combination of hardware and software.

Referring to FIG. 11B, the NTN gateway 223 may include a transceiver 1151, a processor 1153, a memory 1155, and a backhaul transceiver 1157.

The transceiver 1151 may perform functions for transmitting and receiving a signal in a wired communication environment. The transceiver 1151 may include a wired interface to control a direct connection between devices through a transmission medium (e.g., copper wire, optical fiber). For example, the transceiver 1151 may transmit an electrical signal to another device through a copper wire or perform conversion between an electrical signal and an optical signal. The NTN gateway 223 may communicate with the NTN payload 221 through the transceiver 1151. The NTN gateway 223 may be connected to a core network or a CU of a distributed deployment through the transceiver 1151.

The transceiver 1151 may also perform a function for transmitting and receiving a signal in a wireless communication environment. For example, the transceiver 1151 may perform a conversion function between a baseband signal and a bit string according to a physical layer standard of a system. For example, when transmitting data, the transceiver 1151 generates complex-valued symbols by encoding and modulating the transmission bit string. In addition, when receiving data, the transceiver 1151 restores received bit string by demodulating and decoding the baseband signal. In addition, the transceiver 1151 may include a plurality of transmission/reception paths. In addition, according to an embodiment, the transceiver 1151 may be connected to a core network or to other nodes (e.g., integrated access backhaul (IAB)).

As described above, the transceiver 1151 transmits and receives a signal. Accordingly, all or a part of the transceiver 1151 may be referred to as a 'communication unit', 'transmission unit', 'reception unit', or 'transmission/reception unit'. In addition, in the following description, transmission and reception performed through a wireless channel are used to mean that processing as described above is performed by the transceiver 1151.

The processor 1153 controls overall operations of the NTN gateway 223. The processor 1153 may be referred to as a control unit. For example, the processor 1153 transmits and receives a signal through the transceiver 1151 (or through the backhaul transceiver 1157). In addition, the processor 1153 writes and reads data to and from the memory 1155. In addition, the processor 1153 may perform functions of a protocol stack required by the communication standard. In FIG. 11B, only the processor 1153 is illustrated, but according to another implementation, the NTN gateway 223 may include two or more processors.

The memory 1155 stores data such as a basic program, an application program, and setting information for operation of the NTN gateway 223. The memory 1155 may be referred to as a storage unit. The memory 1155 may be configured as a volatile memory, a nonvolatile memory, or a combination of the volatile memory and the nonvolatile memory. In addition, the memory 1155 provides stored data in response to a request of the processor 1153.

The NTN gateway 223 may further include the backhaul transceiver 1157 for connection with a core network or another base station. The backhaul transceiver 1157 provides an interface for performing communication with other nodes in the network. In other words, the backhaul transceiver 1157 converts a bit string transmitted from the base station to another node, for example, another access node, another base station, upper node, core network, and the like, into a physical signal, and converts the physical signal received from other nodes into a bit string.

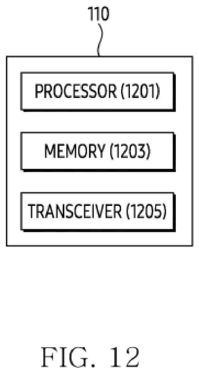

FIG. 12 illustrates components of a terminal according to an embodiment. A terminal exemplifies the UE 110. The UE 110 may perform access to a gNB (e.g., the gNB 120) that provides NR access through the NTN.

Referring to FIG. 12, the UE 110 may include at least one processor 1201, at least one memory 1203, and at least one transceiver 1205. Hereinafter, component are described in singular, but implementation of a plurality of components or sub-components is not excluded.

The processor 1201 controls overall operations of the UE 110. For example, the processor 1210 writes and reads data to and from the memory 1203. For example, the processor 1210 transmits and receives a signal through the transceiver 1205. Although one processor is illustrated in FIG. 12, embodiments of the present disclosure are not limited thereto. To perform embodiments of the present disclosure, the UE 110 may include at least one processor. The processor 1201 may be referred to as a control unit or control means. According to embodiments, the processor 1201 may control the UE 110 to perform at least one of operations or methods according to embodiments of the present disclosure.

The memory 1203 may store data such as a basic program, an application program, and setting information for operation of the UE 110. The memory 1203 may store various data used by at least one component (e.g., the transceiver 1205 and the processor 1201). The data may include, for example, input data or output data for software and commands related thereto. The memory 1203 may be configured as a volatile memory, a nonvolatile memory, or a combination of the volatile memory and the nonvolatile memory. In addition, the memory 1203 may provide stored data according to a request of the processor 1210.

The transceiver 1205 performs functions for transmitting and receiving a signal through a wireless channel. For example, the transceiver 1205 performs a conversion function between a baseband signal and a bit string according to a physical layer standard of a system. For example, when transmitting data, the transceiver 1205 generates complex valued symbols by encoding and modulating a transmission bit string. In addition, when receiving data, the transceiver 1205 restores the received bit string by demodulating and decoding a baseband signal. In addition, the transceiver 1205 up-converts the baseband signal into a radio frequency (RF) band signal and transmits it through an antenna, and down-converts the RF band signal received through the antenna into the baseband signal.

To this end, the transceiver 1205 may include a transmission filter, a reception filter, an amplifier, a mixer, an oscillator, a digital to analog converter (DAC), an analog to digital converter (ADC), and the like. In addition, the transceiver 1205 may include a plurality of transmission/reception paths. Furthermore, the transceiver 1205 may include at least one antenna array configured with a plurality of antenna elements. In terms of hardware, the transceiver 1205 may be configured with a digital unit and an analog unit, and the analog unit may be configured with a plurality of sub-units according to operation power, operation frequency, and the like.

As described above, the transceiver 1205 transmits and receives a signal. Accordingly, the transceiver 1205 may be referred to as 'transmission unit', 'reception unit', or 'transmission/reception unit'. In addition, in the following description, transmission and reception performed through a wireless channel, a backhaul network, an optical cable, Ethernet, and other wired paths are used to mean that the processing as described above is performed by the transceiver 1205. According to an embodiment, the transceiver 1205 may provide an interface for performing communication with other nodes in the network. In other words, the transceiver 1205 converts a bit string transmitted from the UE 110 to another node, for example, another connection node, another base station, an upper node, a core network, and the like, into a physical signal, and converts the physical signal received from other nodes into a bit string.

According to embodiments of the present disclosure, effective NTN access may be supported by transmitting UE capability information for various features to the network from a non-terrestrial network (NTN).

The effects that can be obtained from the present disclosure are not limited to those described above, and any other effects not mentioned herein will be clearly understood by those having ordinary knowledge in the art to which the present disclosure belongs, from the following description.

In embodiments, a method performed by a non-terrestrial network (NTN) device may comprise transmitting a UE capability enquiry message to a user equipment (UE) and receiving a UE capability information message corresponding to the UE capability enquiry message from the UE. The UE capability information may comprise at least one of information for indicating one of a plurality of types of NTN non-geostationary satellite orbit (NGSO) or information on a maximum number of one or more satellites accessible in the UE.

According to an embodiment, the UE capability information message may comprise at least one of information on reference signals available for position estimation, information on a position measurement error, type information for indicating whether the UE is a very small aperture terminal (VSAT) or handheld terminal, or information on an accuracy of a position estimation.

According to an embodiment, the method may further comprise receiving, from the UE, position information of the UE. The UE capability information message may be used for a network-verification for the position information of the UE. For the network-verification, multiple - round trip time (RTT) positioning technique, downlink (DL) time difference of arrival (TDOA) positioning technique, or uplink (UL) TDOA positioning technique may be used.

According to an embodiment, the UE capability information message may comprise information on whether hybrid automatic repeat request (HARQ) retransmission is disabled or not and information on whether HARQ- acknowledge (ACK) feedback is supported in case that the HARQ retransmission is disabled in a HARQ process. The HARQ retransmission may indicate a retransmission of a transport block (TB) or code block group (CBG) of the HARQ process in response to a negative ACK (NACK).

According to an embodiment, the method may further comprise receiving, from the UE, global navigation satellite system (GNSS) assistance information. The GNSS assistance information may comprise information on an GNSS valid interval. The UE capability information message may comprise information related to a gap for reacquiring a GNSS position, between GNSS valid intervals.

In embodiments, a method performed by a user equipment (UE) may comprise receiving a UE capability enquiry message from a non-terrestrial network (NTN) device and transmitting a UE capability information message corresponding to the UE capability enquiry message to the NTN device. The UE capability information may comprise at least one of information for indicating one of a plurality of types of NTN non-geostationary satellite orbit (NGSO) or information on a maximum number of one or more satellites accessible in the UE.

According to an embodiment, the UE capability information message may comprise at least one of information on reference signals available for position estimation, information on a position measurement error, type information for indicating whether the UE is a very small aperture terminal (VSAT) or handheld terminal, or information on an accuracy of a position estimation.

According to an embodiment, the method may further comprise transmitting, to the NTN device, position information of the UE. The UE capability information message may be used for a network-verification for the position information of the UE. For the network-verification, multiple - round trip time (RTT) positioning technique, downlink (DL) time difference of arrival (TDOA) positioning technique, or uplink (UL) TDOA positioning technique may be used.

According to an embodiment, the UE capability information message may comprise information on whether hybrid automatic repeat request (HARQ) retransmission is disabled or not and information on whether HARQ- acknowledge (ACK) feedback is supported in case that the HARQ retransmission is disabled in a HARQ process. The HARQ retransmission may indicate a retransmission of a transport block (TB) or code block group (CBG) of the HARQ process in response to a negative ACK (NACK).

According to an embodiment, the method may further comprise transmitting, to the NTN device, global navigation satellite system (GNSS) assistance information. The GNSS assistance information may comprise information on an GNSS valid interval. The UE capability information message may comprise information related to a gap for reacquiring a GNSS position, between GNSS valid intervals.

In embodiments, a non-terrestrial network (NTN) device may comprise at least one transceiver and at least one processor coupled to the at least one transceiver. The at least one processor may be configured to transmit a UE capability enquiry message to a user equipment (UE), and receive a UE capability information message corresponding to the UE capability enquiry message from the UE. The UE capability information may comprise at least one of information for indicating one of a plurality of types of NTN non-geostationary satellite orbit (NGSO) or information on a maximum number of one or more satellites accessible in the UE.

According to an embodiment, the UE capability information message may comprise at least one of information on reference signals available for position estimation, information on a position measurement error, type information for indicating whether the UE is a very small aperture terminal (VSAT) or handheld terminal, or information on an accuracy of a position estimation.

According to an embodiment, the at least one processor may be further configured to receive, from the UE, position information of the UE. The UE capability information message may be used for a network-verification for the position information of the UE. For the network-verification, multiple - round trip time (RTT) positioning technique, downlink (DL) time difference of arrival (TDOA) positioning technique, or uplink (UL) TDOA positioning technique may be used.

According to an embodiment, the UE capability information message may comprise information on whether hybrid automatic repeat request (HARQ) retransmission is disabled or not and information on whether HARQ- acknowledge (ACK) feedback is supported in case that the HARQ retransmission is disabled in a HARQ process. The HARQ retransmission may indicate a retransmission of a transport block (TB) or code block group (CBG) of the HARQ process in response to a negative ACK (NACK).

According to an embodiment, the at least one processor may be further configured to receive, from the UE, global navigation satellite system (GNSS) assistance information. The GNSS assistance information may comprise information on an GNSS valid interval. The UE capability information message may comprise information related to a gap for reacquiring a GNSS position, between GNSS valid intervals.

In embodiments, a device of a user equipment (UE) may comprise at least one transceiver and at least one processor coupled to the at least one transceiver. The at least one processor may be configured to receive a UE capability enquiry message from a non-terrestrial network (NTN) device, and transmit a UE capability information message corresponding to the UE capability enquiry message to the NTN device. The UE capability information may comprise at least one of information for indicating one of a plurality of types of NTN non-geostationary satellite orbit (NGSO) or information on a maximum number of one or more satellites accessible in the UE.

According to an embodiment, the UE capability information message may comprise at least one of information on reference signals available for position estimation, information on a position measurement error, type information for indicating whether the UE is a very small aperture terminal (VSAT) or handheld terminal, or information on an accuracy of a position estimation.

According to an embodiment, the at least one processor may be further configured to transmit, to the NTN device, position information of the UE. The UE capability information message may be used for a network-verification for the position information of the UE. For the network-verification, multiple - round trip time (RTT) positioning technique, downlink (DL) time difference of arrival (TDOA) positioning technique, or uplink (UL) TDOA positioning technique may be used. According to an embodiment, the UE capability information message may comprise information on whether hybrid automatic repeat request (HARQ) retransmission is disabled or not and information on whether HARQ- acknowledge (ACK) feedback is supported in case that the HARQ retransmission is disabled in a HARQ process. The HARQ retransmission may indicate a retransmission of a transport block (TB) or code block group (CBG) of the HARQ process in response to a negative ACK (NACK).

According to an embodiment, the at least one processor may be further configured to transmit, to the NTN device, global navigation satellite system (GNSS) assistance information. The GNSS assistance information may comprise information on an GNSS valid interval. The UE capability information message may comprise information related to a gap for reacquiring a GNSS position, between GNSS valid intervals.

Methods according to embodiments described in items or specifications of the present disclosure may be implemented as a form of hardware, software, or a combination of hardware and software.

In case of implementing as software, a computer-readable storage medium for storing one or more programs (software module) may be provided. One or more programs stored in the computer-readable storage medium are configured for execution by one or more processors in an electronic device. One or more programs include instructions that allow the electronic device to execute methods according to embodiments described in items or specifications of the present disclosure.

Such a program (software module, software) may be stored in a random access memory, a non-volatile memory including a flash memory, a read only memory (ROM), an electrically erasable programmable read only memory (EEPROM), a magnetic disc storage device, a compact disc-ROM (CD-ROM), digital versatile discs (DVDs), another type of optical storage device, or a magnetic cassette. Alternatively, it may be stored in a memory composed of a combination of some or all of them. In addition, a plurality of each configuration memory may be included.

Additionally, a program may be stored in an attachable storage device that may be accessed through a communication network such as the Internet, Intranet, local area network (LAN), wide area network (WAN), or storage area network (SAN), or a combination of them. Such a storage device may be connected to a device performing an embodiment of the present disclosure through an external port. In addition, a separate storage device on the communication network may also access a device that performs embodiment of the present disclosure.

In specific embodiments of the present disclosure described above, an element included in the disclosure are represented in singular or plural numbers according to a specific embodiment presented. However, singular or plural expressions are selected to suit the presented situation for convenience of explanation, the present disclosure is not limited to singular or plural components, and even a component represented in the plural may be composed of a singular number, or a component represented in the singular may be composed of a plural number.

Meanwhile, in the detailed description of the present disclosure, specific embodiments have been described, but of course, various modifications are possible without departing from the scope of the present disclosure.
The present invention may further be realized according to any one of the following items:

### Items

1. A method performed by a non-terrestrial network (NTN) device, the method comprising:
   transmitting, to a user equipment (UE), a UE capability enquiry message; and
   receiving, from the UE, a UE capability information message corresponding to the UE capability enquiry message,
   wherein the UE capability information comprises at least one of information for indicating one of a plurality of types of NTN non-geostationary satellite orbit (NGSO) or information on a maximum number of one or more satellites accessible in the UE.
2. The method of item 1,
   wherein the UE capability information message comprises at least one of information on reference signals available for position estimation, information on a position measurement error, type information for indicating whether the UE is a very small aperture terminal (VSAT) or handheld terminal, or information on an accuracy of a position estimation.
3. The method of item 2, further comprising:
   receiving, from the UE, position information of the UE,
   wherein the UE capability information message is used for a network-verification for the position information of the UE, and
   wherein, for the network-verification, multiple - round trip time (RTT) positioning technique, downlink (DL) time difference of arrival (TDOA) positioning technique, or uplink (UL) TDOA positioning technique is used.
4. The method of item 1,
   wherein the UE capability information message comprises information on whether hybrid automatic repeat request (HARQ) retransmission is disabled or not and information on whether HARQ- acknowledge (ACK) feedback is supported in case that the HARQ retransmission is disabled in a HARQ process, and
   wherein the HARQ retransmission indicates a retransmission of a transport block (TB) or code block group (CBG) of the HARQ process in response to a negative acknowledge (NACK),
5. The method of item 1, further comprising:
   receiving, from the UE, global navigation satellite system (GNSS) assistance information,
   wherein the GNSS assistance information comprises information on an GNSS valid interval, and
   wherein the UE capability information message comprises information related to a gap for reacquiring a GNSS position, between GNSS valid intervals.
6. A method performed by a user equipment (UE), the method comprising:
   receiving, from a non-terrestrial network (NTN) device, a UE capability enquiry message; and
   transmitting, to the NTN device, a UE capability information message corresponding to the UE capability enquiry message,
   wherein the UE capability information comprises at least one of information for indicating one of a plurality of types of NTN non-geostationary satellite orbit (NGSO) or information on a maximum number of one or more satellites accessible in the UE.
7. The method of item 6,
   wherein the UE capability information message comprises at least one of information on reference signals available for position estimation, information on a position measurement error, type information for indicating whether the UE is a very small aperture terminal (VSAT) or handheld terminal, or information on an accuracy of a position estimation.
8. The method of item 7, further comprising:
   transmitting, to the NTN device, position information of the UE,
   wherein the UE capability information message is used for a network-verification for the position information of the UE, and
   wherein, for the network-verification, multiple - round trip time (RTT) positioning technique, downlink (DL) time difference of arrival (TDOA) positioning technique, or uplink (UL) TDOA positioning technique is used.
9. The method of item 6,
   wherein the UE capability information message comprises information on whether hybrid automatic repeat request (HARQ) retransmission is disabled or not and information on whether HARQ-ACK (acknowledge) feedback is supported in case that the HARQ retransmission is disabled in a HARQ process, and
   wherein the HARQ retransmission indicates a retransmission of a transport block (TB) or code block group (CBG) of the HARQ process in response to a negative ack (NACK),
10. The method of item 6, further comprising:
   transmitting, to the NTN device, global navigation satellite system (GNSS) assistance information,
   wherein the GNSS assistance information comprises information on an GNSS valid interval, and
   wherein the UE capability information message comprises information related to a gap for reacquiring a GNSS position, between GNSS valid intervals.
11. A non-terrestrial network (NTN) device, comprising:
   at least one transceiver; and
   at least one processor coupled to the at least one transceiver,
   wherein the at least one processor is configured to:
      transmit, to a user equipment (UE), a UE capability enquiry message; and
      receive, from the UE, a UE capability information message corresponding to the UE capability enquiry message,
      wherein the UE capability information comprises at least one of information for indicating one of a plurality of types of NTN non-geostationary satellite orbit (NGSO) or information on a maximum number of one or more satellites accessible in the UE.
12. The NTN device of item 11, wherein the at least one processor is configured to one of items 1 to 5.
13. A device of a user equipment (UE), comprising:
   at least one transceiver; and
   at least one processor coupled to the at least one transceiver,
   wherein the at least one processor is configured to:
      receive, from a non-terrestrial network (NTN) device, a UE capability enquiry message; and
      transmit, to the NTN device, a UE capability information message corresponding to the UE capability enquiry message,
      wherein the UE capability information comprises at least one of information for indicating one of a plurality of types of NTN non-geostationary satellite orbit (NGSO) or information on a maximum number of one or more satellites accessible in the UE.
14. The device of item 13, wherein the at least one processor is configured to one of items 6 to 10.

## Claims

1. A method performed by a network device, the method comprising:
transmitting, to a user equipment, UE, a UE capability enquiry message; and
receiving, from the UE, a UE capability information message corresponding to the UE capability enquiry message,
wherein the UE capability information message includes:
information for indicating whether the UE supports a non-terrestrial network, NTN, access or not, and
information related to a satellite antenna of the UE for the NTN access.

2. The method of claim 1, wherein the UE capability information message includes information for indicating a UE type related to a very small aperture terminal, VSAT.

3. The method of claim 1, wherein the UE capability information message includes information on a maximum number of one or more satellites simultaneously accessible in the UE.

4. The method of claim 1, wherein the UE capability information message includes information indicating one of a plurality of types related to the NGSO scenario, information on a position measurement error, and information on an accuracy of a position estimation.

5. The method of claim 1, wherein the UE capability information message comprises information related to a gap for reacquiring a global navigation satellite system, GNSS position.

6. A method performed by a user equipment, UE, the method comprising:
receiving, from a network device, a UE capability enquiry message; and
transmitting, to the network device, a UE capability information message corresponding to the UE capability enquiry message,
wherein the UE capability information message includes:
information for indicating whether the UE supports a non-terrestrial network, NTN, access or not, and
information related to a satellite antenna of the UE for the NTN access.

7. The method of claim 6, wherein the UE capability information message includes information for indicating a UE type related to a very small aperture terminal, VSAT.

8. The method of claim 6, wherein the UE capability information message includes information on a maximum number of one or more satellites simultaneously accessible in the UE.

9. The method of claim 6, wherein the UE capability information message includes information indicating one of a plurality of types related to the NGSO scenario, information on a position measurement error, and information on an accuracy of a position estimation.

10. The method of claim 6, wherein the UE capability information message comprises information related to a gap for reacquiring a global navigation satellite system, GNSS position.

11. A network device comprising:
at least one transceiver; and
at least one processor coupled to the at least one transceiver,
wherein the at least one processor is configured to:
transmit, to a user equipment, UE, a UE capability enquiry message; and
receive, from the UE, a UE capability information message corresponding to the UE capability enquiry message, and
wherein the UE capability information message includes:
information for indicating whether the UE supports a non-terrestrial network, NTN, access or not, and
information related to a satellite antenna of the UE for the NTN access.

12. The network device of claim 11, wherein the UE capability information message includes information on a maximum number of one or more satellites simultaneously accessible in the UE and information for indicating a UE type related to a very small aperture terminal, VSAT.

13. A user equipment, UE, comprising:
at least one transceiver; and
at least one processor coupled to the at least one transceiver,
wherein the at least one processor is configured to:
receive, from a network device, a UE capability enquiry message; and
transmit, to the network device, a UE capability information message corresponding to the UE capability enquiry message,
wherein the UE capability information message includes:
information for indicating whether the UE supports a non-terrestrial network, NTN, access or not, and
information related to a satellite antenna of the UE for the NTN access.

14. The UE of claim 13, wherein the UE capability information message includes information on a maximum number of one or more satellites simultaneously accessible in the UE and information for indicating a UE type related to a very small aperture terminal, VSAT.

15. The method of claim 1, the method of claim 6, the network device of claim 11, or the UE of claim 13, wherein the information related to the satellite antenna comprises polarization information of the satellite antenna.
